# EUROPÄISCHE PATENTSCHRIFT

(11) **EP 3 687 701 B1**
(45) Veröffentlichungstag und Bekanntmachung des Hinweises auf die Patenterteilung: **04.08.2021**
(21) Anmeldenummer: 18782913.0
(22) Anmeldetag: 27.09.2018
(51) Int. Cl.: B05B 1/30, B05B 1/14, B41J 2/175

(54) **APPLIKATOR MIT EINEM GERINGEN DÜSENABSTAND**
APPLICATOR WITH REDUCED NOZZLE INTERVAL
APPLICATEUR À INTERVAL DE BUSES RÉDUIT

(30) Priorität: 27.09.2017 DE 102017122495
(43) Veröffentlichungstag der Anmeldung: 05.08.2020
(73) Patentinhaber: Dürr Systems AG, 74321 Bietigheim-Bissingen (DE)
(72) Erfinder: FRITZ, Hans-Georg, 73760 Ostfildern (DE); WÖHR, Benjamin, 74363 Güglingen (DE); KLEINER, Marcus, 74354 Besigheim (DE); BUBEK, Moritz, 71640 Ludwigsburg (DE); BEYL, Timo, 74354 Besigheim (DE); HERRE, Frank, 71739 Oberriexingen (DE); SOTZNY, Steffen, 71720 Oberstenfeld (DE); TANDLER, Daniel, 70469 Stuttgart (DE); BERNDT, Tobias, 71254 Ditzingen (DE)
(74) Vertreter: v. Bezold & Partner Patentanwälte - PartG mbB
(86) Internationale Anmeldenummer: PCT/EP2018/076219
(87) Internationale Veröffentlichungsnummer: WO 2019/063668

(56) Entgegenhaltungen:
- EP-A1- 0 276 053
- EP-A2- 2 055 394
- WO-A1-2012/072576
- DE-A1- 2 612 614
- DE-A1- 3 506 393
- DE-A1- 3 634 137
- DE-T2- 69 126 667
- US-A- 4 157 149

## Beschreibung

Die Erfindung betrifft einen Applikator (z.B. Druckkopf) zur Applikation eines Beschichtungsmittels (z.B. Lack) auf ein Bauteil (z.B. Kraftfahrzeugkarosseriebauteil oder Anbauteil für ein Kraftfahrzeugkarosseriebauteil).

Aus dem Stand der Technik (z.B. US 9 108 424 B2) sind sogenannte Drop-on-Demand-Druckköpfe bekannt, die einen Tröpfchenstrahl oder einen kontinuierlichen Beschichtungsmittelstrahl ausgeben und deren Wirkprinzip auf der Verwendung von elektromagnetischen Ventilen beruht. Dabei wird ein magnetisch angetriebener Anker verschiebbar in einer Spule geführt. Der verschiebbare Anker kann hierbei unmittelbar eine Ventilnadel bilden oder mittelbar auf eine separate Ventilnadel wirken, die in Abhängigkeit von ihrer Stellung einen Ventilsitz wahlweise verschließt oder für eine Beschichtungsmittelabgabe freigibt. Die Düsen zur Beschichtungsmittelabgabe und die zugehörigen elektromagnetischen Aktoren sind hierbei entlang einer Düsenreihe hintereinander angeordnet. Derartige Druckköpfe werden auch in WO 2012/058373 A2 beschrieben. Diese bekannten Druckköpfe arbeiten ebenfalls mit Ventilkolben, die durch elektromagnetische Aktoren bewegt werden, wobei die Ventilkolben in einem Führungsinnenrohr (Spuleninnenrohr) in der Spule verlaufen.

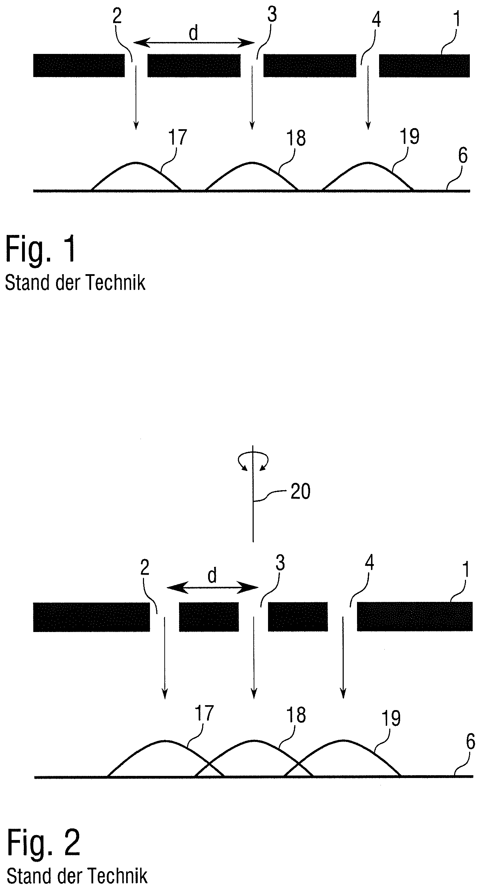

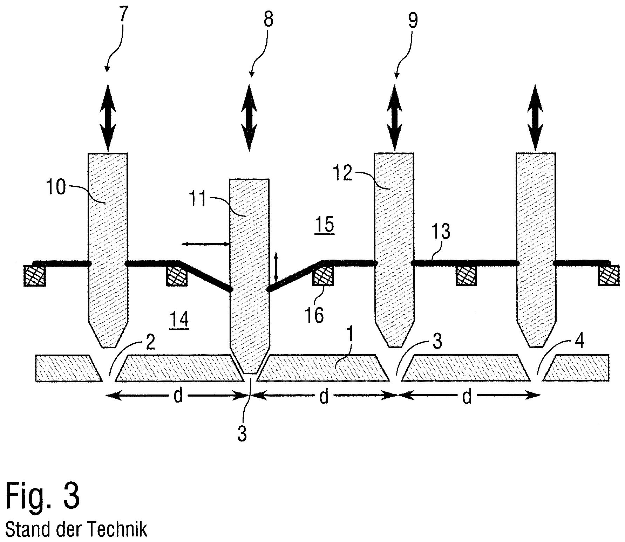

Problematisch bei den bekannten Drop-on-Demand-Druckköpfen ist der Düsenabstand zwischen den benachbarten Düsen, wie nachfolgend unter Bezugnahme auf die Figuren 1 bis 4 erläutert wird. So weisen die bekannten Drop-on-Demand-Druckköpfe üblicherweise eine Düsenplatte 1 mit zahlreichen Düsen 2-4 auf, die in der Düsenplatte 1 entlang einer linearen Düsenreihe 5 angeordnet sind. Die einzelnen Düsen 2-4 können jeweils einen Beschichtungsmittelstrahl auf die Oberfläche eines Bauteils 6 abgeben, wie in den Figuren 1 und 2 durch Pfeile angedeutet ist. Die Steuerung der Beschichtungsmittelabgabe durch die Düsen 2-4 erfolgt individuell durch Aktoren 7-9, die elektromagnetisch arbeiten und jeweils eine Ventilnadel 10-12 in Richtung des Doppelpfeils in Figur 3 verschieben. Die Ventilnadel 11 ist hierbei in Figur 3 in einer abgesenkten Stellung dargestellt, in der die Ventilnadel 11 die zugehörige Düse 3 für eine Beschichtungsmittelabgabe verschließt. Die Ventilnadeln 10 und 12 sind dagegen in Figur 3 in einer angehobenen Stellung dargestellt, in der die beiden Ventilnadeln 10, 12 die zugehörigen Düsen 2, 4 für eine Beschichtungsmittelabgabe freigeben.

Darüber hinaus ist in Figur 3 eine Dichtungsmembran 13 dargestellt, die in dem Druckkopf einen beschichtungsmittelgefüllten Düsenraum 14 von einem Aktorraum 15 fluidisch trennt. Die Dichtungsmembran 13 verhindert dadurch, dass das Beschichtungsmittel aus dem Düsenraum 14 die Aktoren 7-9 in dem Aktorraum 15 kontaminiert. Die Dichtungsmembran 13 ist hierbei in einer Membranentkopplung 16 aufgehängt, wobei die Membranentkopplung 16 verhindert, dass eine Verschiebung einer der Ventilnadeln 10-12 zu einer entsprechenden Verschiebung der benachbarten Ventilnadeln 10-12 führt. Die Membranentkopplung 16 bewirkt also eine mechanische Entkopplung zwischen den benachbarten Ventilnadeln 10-12, damit diese die Beschichtungsmittelabgabe durch die Düsen 2-4 individuell und unabhängig voneinander steuern können.

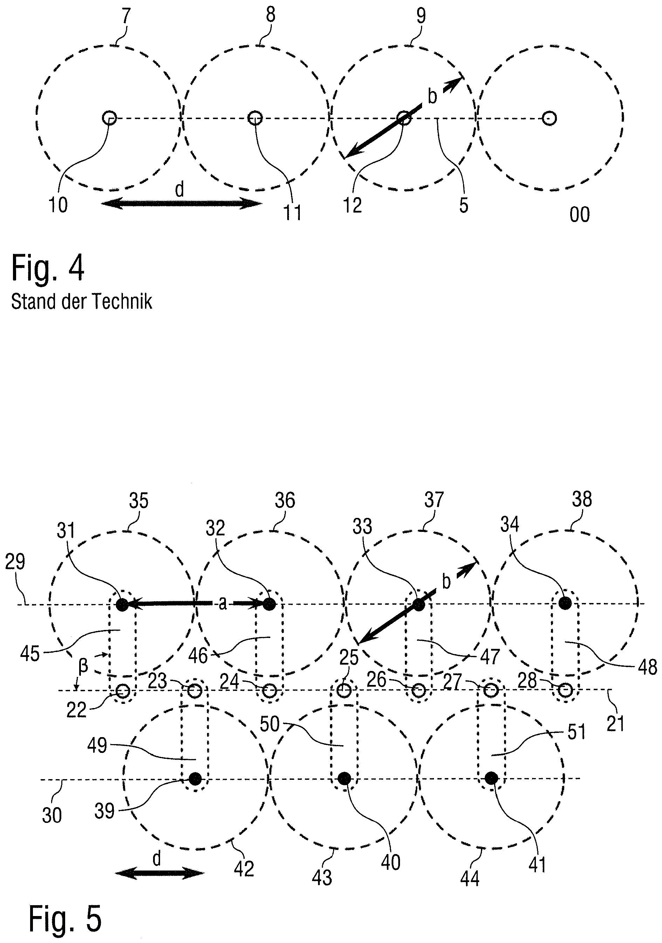

Aus Figur 4 ist weiterhin ersichtlich, dass die benachbarten Aktoren 7-9 entlang der Düsenreihe 5 in einem bestimmten Abstand d angeordnet sind. Die einzelnen Aktoren 7-9 weisen hierbei jeweils einen Durchmesser b auf, der den minimal erzielbaren Düsenabstand d nach unten begrenzt. Die Düsen 2-4 können entlang der Düsenreihe 5 also nicht beliebig eng aneinander angeordnet werden. Dies kann dazu führen, dass aus den Düsen 2-4 Beschichtungsmitteltröpfchen 17-19 auf die Oberfläche des Bauteils 6 abgegeben werden, die - wie in Figur 1 dargestellt ist - zu weit voneinander entfernt sind, um nach dem Aufbringen zu einem zusammenhängenden Beschichtungsmittelfilm zu verlaufen.

Zur Lösung dieses Problems des zu großen Düsenabstands d ist es aus dem Stand der Technik bekannt, den Druckkopf während des Betriebs um eine Drehachse 20 zu drehen, die rechtwinklig zur Oberfläche des Bauteils 6 und rechtwinklig zu der senkrecht zur Zeichenebene verlaufenden Lackierbahn verläuft. Dies hat zur Folge, dass der effektive Düsenabstand d in der Zeichenebene, d.h. rechtwinklig zur Lackierbahn, verringert wird. Diese Verdrehung des Drop-on-Demand-Druckkopfs ermöglicht es, dass die Beschichtungsmitteltröpfchen 17-19 auf der Oberfläche des Bauteils 6 so nah zusammen liegen, dass sie nach dem Auftragen zu einem durchgehenden Beschichtungsmittelfilm verlaufen, wie in Figur 2 dargestellt ist. Die Drehung des Drop-on-Demand-Düsenkopfs ermöglicht also eine Lösung des Problems, dass der minimale Düsenabstand d durch den Durchmesser b der Aktoren 7-9 nach unten begrenzt ist. Allerdings wäre es wünschenswert, auf eine solche Drehung verzichten zu können. Insbesondere wäre es wünschenswert, den Düsenabstand d in einem Druckkopf zu verringern.

Zum technischen Hintergrund der Erfindung ist auch hinzuweisen auf EP 0 426 473 A2, US 2013/0127955 A1, WO 2012/058373 A2, DE 10 2014 013158 A1, DE 26 12 614 A1, US 4 157 149 A, WO 2012/072576 A1, DE 691 26 667 T2, EP 2 055 394 A2, DE 35 06 393 A1, EP 0 276 053 A1 und WO 2010/046064 A1.

Schließlich offenbart DE 36 34 137 A1 einen Applikator gemäß dem Oberbegriff von Anspruch 1. Dieser bekannte Applikator ist jedoch noch nicht vollständig befriedigend.

Der Erfindung liegt deshalb die Aufgabe zugrunde, einen entsprechend verbesserten Applikator (z.B. Druckkopf) zu schaffen.

Diese Aufgabe wird durch einen erfindungsgemäßen Applikator gemäß dem Hauptanspruch gelöst.

Der erfindungsgemäße Applikator (z.B. Druckkopf) eignet sich allgemein zur Applikation eines Beschichtungsmittels. Die Erfindung ist also hinsichtlich des Typs des zu applizierenden Beschichtungsmittels nicht auf ein bestimmtes Beschichtungsmittel beschränkt. Vorzugsweise ist der Druckkopf jedoch zur Applikation eines Lacks ausgelegt. Es kann sich jedoch bei dem Beschichtungsmittel alternativ auch um einen Klebstoff handeln oder um ein Dichtungsmaterial oder ein Dämmmaterial. Der erfindungsgemäße Applikator kann also auch als Klebstoff-Applikator oder als Sealing-Applikator ausgelegt sein.

Weiterhin ist zu erwähnen, dass der erfindungsgemäße Druckkopf allgemein geeignet ist, um das Beschichtungsmittel (z.B. Lack) auf ein bestimmtes Bauteil zu applizieren. Hinsichtlich des Typs des zu beschichtenden Bauteils ist die Erfindung ebenfalls nicht beschränkt. Vorzugsweise ist der erfindungsgemäße Applikator jedoch dazu ausgelegt, ein Beschichtungsmittel (z.B. Lack) auf ein Kraftfahrzeugkarosseriebauteil oder ein Anbauteil eines Kraftfahrzeugkarosseriebauteils zu applizieren.

Der erfindungsgemäße Applikator (z.B. Druckkopf) weist zunächst in Übereinstimmung mit dem Stand der Technik eine Düsenreihe mit mehreren Düsen auf, um das Beschichtungsmittel jeweils in Form eines Beschichtungsmittelstrahls zu applizieren, wobei die Düsen entlang der Düsenreihe vorzugsweise in einer gemeinsamen Düsenebene angeordnet sind.

Hierbei ist zu erwähnen, dass der erfindungsgemäße Druckkopf aus den Düsen keinen Sprühkegel des Beschichtungsmittels abgibt, sondern jeweils räumlich begrenzte Beschichtungsmittelstrahlen (im Wesentlichen zusammenhängender Strahl oder Tropfenstrahl) mit einer nur geringen Strahlaufweitung. Der erfindungsgemäße Applikator unterscheidet sich also von Zerstäubern (z.B. Rotationszerstäuber, Luftzerstäuber, etc.), die keinen räumlich begrenzten Beschichtungsmittelstrahl abgeben, sondern einen Sprühkegel des Beschichtungsmittels.

Weiterhin ist zu erwähnen, dass der erfindungsgemäße Applikator (z.B. Druckkopf) eine einzige Düsenreihe aufweisen kann, in der die Düsen vorzugsweise äquidistant angeordnet sind. Es besteht jedoch im Rahmen der Erfindung auch die Möglichkeit, dass der Druckkopf mehrere Düsenreihen aufweist, die vorzugsweise parallel zueinander angeordnet sind.

Darüber hinaus weist der erfindungsgemäße Druckkopf in Übereinstimmung mit dem Stand der Technik mehrere Aktoren auf, um die Düsen wahlweise freizugeben oder zu verschließen, wie bereits eingangs zum Stand der Technik beschrieben wurde.

Bei den Aktoren kann es sich beispielsweise - wie bereits eingangs beschrieben wurde - um elektromagnetische Aktoren handeln. Es besteht jedoch alternativ auch die Möglichkeit, dass es sich bei den Aktoren um piezoelektrische Aktoren oder um pneumatische Aktoren handelt, um nur einige Beispiele zu nennen. Die Erfindung ist also hinsichtlich des technisch-physikalischen Wirkungsprinzips der Aktoren nicht auf einen bestimmten Aktortyp beschränkt.

Die Erfindung zeichnet sich nun dadurch ab, dass der Düsenabstand zwischen den benachbarten Düsen der Düsenreihe kleiner ist als die Außenabmessung (z.B. Außendurchmesser) der einzelnen Aktoren entlang der Düsenreihe. Die Erfindung überwindet also die eingangs beschriebene Untergrenze für den Düsenabstand, die bisher durch die Außenabmessung der einzelnen Aktoren gegeben war. So konnte der Düsenabstand zwischen den benachbarten Düsen der Düsenreihe bisher nicht kleiner bemessen sein als die Außenabmessung der einzelnen Aktoren, da der zur Verfügung stehende Bauraum für die Aktoren ansonsten nicht ausreichen würde. Hierbei ist zu erwähnen, dass der Düsenabstand jeweils zwischen den Mittelpunkten der Düsen gemessen wird.

Diese Verringerung des Düsenabstands bei unveränderten Außenabmessungen der einzelnen Aktoren lässt sich im Rahmen der Erfindung durch eine fluidische Entzerrung des Applikators erreichen, indem die Steuerventile und/oder die Aktoren nicht mehr exakt in der Düsenreihe angeordnet werden, sondern versetzt dazu. So kann der erfindungsgemäße Applikator mehrere Steuerventile aufweisen, um die Beschichtungsmittelabgabe durch die Düsen zu steuern, wobei die Steuerventile von den Aktoren angesteuert werden. Die fluidische Entzerrung sieht dann vorzugsweise vor, dass die Steuerventile jeweils von der zugehörigen Düse räumlich getrennt und über jeweils einen Strömungskanal mit der zugehörigen Düse verbunden sind, um eine räumliche Entzerrung der Düsen einerseits und der Ventile andererseits zu ermöglichen. Die einzelnen Steuerventile sind hierbei mit ihrer Absperrstelle seitlich gegenüber der Düsenreihe versetzt angeordnet, um den Düsenabstand verringern zu können. Diese versetzte Anordnung der Steuerventile ermöglicht auch eine seitlich versetzte Anordnung der Aktoren, so dass der Düsenabstand nicht mehr durch die Außenabmessungen der einzelnen Aktoren nach unten begrenzt wird.

In einer Ausgestaltung der Erfindung sind die Steuerventile beiderseits der Düsenreihe in zwei bezüglich der Düsenreihe gegenüber liegenden Ventilreihen hintereinander angeordnet. Die Düsen entlang der Düsenreihe können dann abwechselnd über die Strömungskanäle mit Steuerventilen der gegenüber überliegenden Ventilreihen verbunden sein. Beispielsweise kann die erste Düse der Düsenreihe mit einem Steuerventil der linken Ventilreihe verbunden sein, während die zweite Düse der Düsenreihe mit einem Steuerventil aus der rechten Ventilreihe verbunden ist. Die dritte Düse der Düsenreihe wird dann wieder mit einem Ventil aus der linken Ventilreihe verbunden und so weiter. Dadurch kann der Düsenabstand der benachbarten Düsen entlang der Düsenreihe auf die Hälfte der Außenabmessung der einzelnen Aktoren verringert werden.

In einer anderen Ausgestaltung der Erfindung gehen die Strömungskanäle von der Düsenreihe ausgehend in einer Entzerrungsebene rechtwinklig zu der Düsenreihe in mehr als zwei verschiedene Richtungen ab und zwar in verschiedenen Winkeln, wobei die verschiedenen Richtungen der Strömungskanäle in der Entzerrungsebene jeweils einen Winkel von 0°-90°, 20°-70°, 30°-60°, 40°-50° oder insbesondere 0° oder 45° einschließen können. Die Düsen entlang der Düsenreihe sind dann abwechselnd mit einem der verschiedenen Strömungskanäle verbunden. Die Aktoren sind hierbei also in der Entzerrungsebene in verschiedenen Winkellagen angeordnet und dadurch räumlich ebenfalls entzerrt, was eine größere Packungsdichte und einen entsprechend geringeren Düsenabstand ermöglicht.

Gemäß der Erfindung sind die Aktoren in mehreren Aktorebenen angeordnet, wobei die Aktorebenen parallel zu der Düsenebene in verschiedenen Abständen zu der Düsenebene verlaufen. Die Aktoren in den einzelnen Aktorebenen sind hierbei jeweils in mehreren Aktorreihen parallel zu der Düsenreihe angeordnet, insbesondere beiderseits der Düsenreihe. Die Aktoren sind hierbei also vertikal entzerrt angeordnet, d.h. rechtwinklig zu der Düsenebene in verschiedenen Abständen. Darüber hinaus sind die Aktoren hierbei auch horizontal entzerrt angeordnet, d.h. parallel zur Düsenebene verteilt. Diese räumliche Entzerrung der Aktoren in verschiedenen Richtungen (horizontal und vertikal) ermöglicht ebenfalls eine Verringerung des Düsenabstands.

In einer Ausgestaltung der Erfindung sind in den einzelnen Aktorebenen jeweils zwei Aktorreihen beiderseits der Düsenreihe angeordnet, wobei die Aktorreihen jeweils mehrere Aktoren enthalten.

Hierbei haben die vertikal (d.h. rechtwinklig zu der Düsenebene und/oder zur Ventilsitzebene) übereinander angeordneten Aktorebenen zueinander vorzugsweise einen horizontalen Versatz, der im Wesentlichen gleich groß wie der Düsenabstand oder ein ganzzahliges Vielfaches des Düsenabstands zwischen den benachbarten Düsen in der Düsenreihe ist. Der Versatz kann jedoch auch einem ganzzahligen Vielfachen des Düsenabstands entsprechen. Darüber hinaus sind die Aktoren in den einzelnen Aktorreihen vorzugsweise im Wesentlichen äquidistant angeordnet.

Weiterhin ist zu erwähnen, dass die Steuerventile in unterschiedlichen Abständen zu den zugehörigen Düsen angeordnet sein können. Dies hat zur Folge, dass die zugehörigen Strömungskanäle zwischen den Steuerventilen und den zugehörigen Düsen unterschiedliche Längen haben. Die unterschiedliche Länge der Strömungskanäle kann wiederum zu einem unterschiedlichen Strömungsverhalten führen, so dass die Beschichtungsmittelabgabe durch die einzelnen Düsen unterschiedlich ist. Es ist jedoch wünschenswert, dass die Beschichtungsmittelabgabe durch die einzelnen Düsen unabhängig von der Länge der Strömungskanäle einheitlich ist. Es ist deshalb im Rahmen der Erfindung möglich, die unterschiedliche Länge der Strömungskanäle durch Druckausgleichsmittel zu kompensieren, so dass die verschiedenen Düsen unabhängig von der Länge der zugehörigen Strömungskanäle ein einheitliches Abgabeverhalten haben.

Beispielsweise können die Druckausgleichsmittel aus einem mäanderförmigen Verlauf, einem zickzackförmigen Kanalverlauf, einem spiralförmigen Kanalverlauf oder einer Kanalengstelle des Strömungskanals bestehen, wobei diese Druckausgleichsmittel vorzugsweise in den kürzeren Strömungskanälen angeordnet sind, da diese aufgrund ihrer geringeren Länge ansonsten einen geringeren Strömungswiderstand hätten.

Weiterhin ist zu erwähnen, dass die einzelnen Steuerventile jeweils einen Ventilsitz aufweisen können, der wahlweise verschlossen oder freigegeben werden kann. Die einzelnen Ventilsitze können im geöffneten Zustand einen lichten Durchmesser von 50µm-1500µm aufweisen.

Darüber hinaus weisen die einzelnen Steuerventile ein auslenkbares Ventilelement auf, wobei es sich beispielsweise um eine flexible Ventilmembran handeln kann. Das auslenkbare Ventilelement (z.B. Ventilmembran) kann den Ventilsitz dann in Abhängigkeit von seiner Auslenkung wahlweise freigeben oder verschließen.

Zum Auslenken des Ventilelements (z.B. Ventilmembran) bestehen im Rahmen der Erfindung verschiedene Möglichkeiten, die nachfolgend kurz beschrieben werden.

In einer Ausgestaltung der Erfindung ist ein verschiebbarer Stößel vorgesehen, der von dem zugehörigen Aktor verschoben wird und in einer Schließstellung das Ventilelement (z.B. Ventilmembran) gegen den Ventilsitz drückt und den Ventilsitz dadurch abdichtet.

In einer anderen Ausgestaltung der Erfindung ist dagegen eine Druckkammer vorgesehen, die mit einem variablen Druck beaufschlagt werden kann, wobei der Druck in der Druckkammer auf das auslenkbare Ventilelement (z.B. Ventilmembran) wirkt. Durch eine ausreichende Druckbeaufschlagung der Druckkammer kann das Ventilelement (z.B. Ventilmembran) also gegen den Ventilsitz gedrückt werden und diesen dadurch abdichten. Beispielsweise kann die Druckkammer mit Druckluft beaufschlagt werden.

Hierbei ist zu erwähnen, dass sich das Ventilelement (z.B. Ventilmembran) über mehrere der Ventilsitze erstrecken kann, wobei das gemeinsame Ventilelement dann trotzdem individuell für die einzelnen Ventilsitze auslenkbar ist, damit die Beschichtungsmittelabgabe durch die einzelnen Düsen individuell gesteuert werden kann.

Hierbei besteht auch die Möglichkeit, dass das Ventilelement (z.B. Ventilmembran) die gleiche Funktion erfüllt wie die eingangs zum Stand der Technik erwähnte Dichtungsmembran, die einen Aktorraum von einem beschichtungsmittelgefüllten Zuleitungsraum trennt und dadurch verhindert, dass die Aktoren in dem Aktorraum von dem Beschichtungsmittel kontaminiert werden. Das Ventilelement (z.B. Ventilmembran) hat hierbei also zwei Funktionen, nämlich zum einen das Öffnen bzw. Verschließen der Düsen und zum anderen die fluidische Trennung des Aktorraumes von dem Zuleitungsraum.

Weiterhin ist zu erwähnen, dass die einzelnen Steuerventile jeweils eine Rückstellfeder aufweisen können, wobei die Rückstellfeder den Stößel in eine Schließstellung oder in eine Öffnungsstellung vorspannen kann. Vorzugsweise spannt die Rückstellfeder den Stößel jedoch in die Schließstellung vor, d.h. das zugehörige Steuerventil ist ohne eine aktive Ansteuerung geschlossen.

Darüber hinaus kann anstelle einer Ventilmembran eine verschiebbare Ventilnadel vorgesehen sein, wobei die Ventilnadel den Ventilsitz in Abhängigkeit von ihrer Position wahlweise freigibt oder verschließt. Die Ventilnadel kann durch ein Dichtelement (z.B. Dichtungsmembran) hindurchgeführt sein, wobei das Dichtelement den Aktorraum von dem beschichtungsmittelgefüllten Zuleitungsraum trennt und dadurch verhindert, dass die Aktoren in dem Aktorraum von dem Beschichtungsmittel kontaminiert werden. Diese Ventilnadel kann an ihrer Spitze jeweils ein separates Dichtungselement aufweisen.

Weiterhin ist zu erwähnen, dass die Ventilnadel bzw. der Stößel jeweils von einem Aktor verschoben werden können, wobei es sich beispielsweise um einen elektromagnetischen Aktor, einen piezoelektrischen Aktor oder einen pneumatischen Aktor handeln kann. Die Erfindung ist also hinsichtlich des technisch-physikalischen Wirkungsprinzips des Aktors nicht auf ein bestimmtes Wirkungsprinzip beschränkt.

Darüber hinaus ist zu erwähnen, dass die einzelnen Aktoren wahlweise einfach oder doppelt wirkend sein können. Bei einem einfach wirkenden Aktor wird die Ventilnadel bzw. der Stößel von dem zugehörigen Aktor nur in eine einzige Richtung aktiv bewegt, wohingegen die Rückstellbewegung durch eine Rückstellfeder bewirkt wird. Bei einem doppelt wirkenden Aktor werden dagegen beide Bewegungen in den entgegengesetzten Richtungen von dem zugehörigen Aktor aktiv bewirkt, so dass auf eine Rückstellfeder auch verzichtet werden könnte.

Ferner besteht auch die Möglichkeit, dass die einzelnen Steuerventile außerhalb des Applikators angeordnet sind, wobei die Steuerventile dann durch eine Fluidleitung (z.B. Schlauch) mit dem Applikator verbunden sind.

Der erfindungsgemäße Applikator kann auch einen gemeinsamen Versorgungskanal aufweisen, um die einzelnen Strömungskanäle für die einzelnen Ventile mit dem Beschichtungsmittel zu speisen. Beispielsweise kann dieser Versorgungskanal eine Kanalhöhe von 100µm-2000µm, eine Kanalbreite von 1mm-5mm und/oder eine Kanallänge von 1mm-100mm aufweisen.

Die erfindungsgemäße Verringerung des Düsenabstandes ermöglicht es, dass der Abstand zwischen den benachbarten Ventilsitzen mindestens doppelt so groß ist wie der Düsenabstand zwischen den benachbarten Düsen.

Der Strömungskanal und/oder der Versorgungskanal in dem Applikator können durch verschiedene Herstellungsverfahren hergestellt werden. Beispielhaft sind die folgenden Herstellungsverfahren zu nennen:
- Lithographieverfahren, insbesondere Weichlithographieverfahren,
- 3D-Druck,
- Opferschichtverfahren,
- Escargot-Verfahren,
- LIGA-Verfahren,
- thermisches Bonden,
- Diffusionsschweißen,
- Laserabtragen,
- Laserschneiden,
- Verkleben, Heißprägen,
- Ätzverfahren,
- Spritzgießen,
- selektives Lasersintern,
- selektives Laserschmelzen,
- mechanisches Bearbeiten,
- eine Kombination der vorstehend genannten Verfahren.

Der Strömungskanal und/oder der Versorgungskanal können hierbei in einem Substrat (d.h. einem Gehäusekörper) verlaufen, das aus einem Material besteht, das gegenüber dem Beschichtungsmittel inert ist. Beispielsweise kann das Substrat aus Edelstahl, Kunststoff, Silizium oder Glas bestehen. Als Kunststoffe kommen beispielsweise folgende Kunststoffe in Frage:
- Polyetheretherketon (PEEK),
- Polyetherketon (PEKK),
- Polyoxymethylen (POM),
- Polymethylmethacrylat (PMMA),
- Polyamid (PA),
- Polyethylen (PE),
- Polypropylen (PP),
- Polystyrol (PS),
- Polycarbonat (PC),
- Cycloolefin-Copolymere, insbesondere Topas®, Zeonor® oder Zeonex®.

Zu den Strömungskanälen ist ferner zu erwähnen, dass diese mindestens auf einem Teil ihrer Länge einen Winkel von 0-90°, 20°-85°, 45°-80° mit dem Beschichtungsmittelstrahl einschließen können.

Weiterhin können die Strömungskanäle mindestens auf einem Teil ihrer Länge in einem Winkel von 0-90° oder 45°-90° oder quer, insbesondere rechtwinklig, zu der Düsenreihe verlaufen.

Die einzelnen Strömungskanäle können jeweils einen Kanalquerschnitt mit einer Kanalhöhe von 50µm-1000µm oder 100µm-500µm aufweisen.

Die Kanalbreite der einzelnen Strömungskanäle liegt dagegen vorzugsweise im Bereich von 50µm-1000µm oder 100µm-500µm.

Die Kanallänge der einzelnen Strömungskanäle liegt dagegen vorzugsweise im Bereich von 0,1mm-50mm oder 0,5mm-25mm. Eine kurze Kanallänge ist hierbei wünschenswert, damit die Strömungskanäle zwischen der Absperrstelle der Steuerventile einerseits und den Düsen andererseits ein möglichst kleines Volumen aufweisen, damit ein Nachtropfen verhindert wird und ein gutes dynamisches Ansprechverhalten erreicht wird. Das Volumen der Strömungskanäle zwischen der Absperrstelle der Steuerventile und den Düsen ist deshalb vorzugsweise kleiner als 1mL, 0,5mL, 0,1mL, 0,01mL oder 0,001mL.

Weiter ist zu erwähnen, dass die Strömungskanäle auch einen runden Kanalquerschnitt aufweisen können, insbesondere mit einem Kanaldurchmesser von 50µm-1000µm.

Die Erfindung ermöglicht einen sehr kleinen Düsenabstand der benachbarten Düsen entlang der Düsenreihe, wobei der Düsenabstand kleiner sein kann als 3mm, 2mm, 1mm oder sogar kleiner als 0,5mm.

Die Steuerventile sind dagegen mit ihren Absperrstellen vorzugsweise in einem Abstand von mindestens 1mm, 2mm, 3mm, 4mm, 5mm oder 6mm zu der Düsenreihe angeordnet, um eine räumliche Entzerrung der Steuerventile einerseits und der Düsen andererseits zu ermöglichen.

Ferner ist zu erwähnen, dass die Düsen entlang der Düsenreihe vorzugsweise äquidistant angeordnet sind.

Darüber hinaus ist zu erwähnen, dass die Erfindung nicht nur Schutz beansprucht für den vorstehend beschriebenen erfindungsgemäßen Applikator. Vielmehr beansprucht die Erfindung auch Schutz für einen Beschichtungsroboter (z.B. Lackierroboter) mit einem solchen Applikator.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Darstellung eines herkömmlichen Druckkopfs, wobei die Beschichtungsmitteltropfen nicht zu einem zusammenhängenden Beschichtungsmittelfilm zusammenlaufen,
- Figur 2: eine Abwandlung von Figur 1 mit einem gedrehten Druckkopf, so dass die Beschichtungsmitteltröpfchen zu einem zusammenhängenden Beschichtungsmittelfilm zusammenlaufen,
- Figur 3: eine schematische Darstellung eines herkömmlichen Druckkopfs,
- Figur 4: eine schematische Schnittansicht durch einen herkömmlichen Druckkopf zur Verdeutlichung der Düsenabstände,
- Figur 5: eine schematische Darstellung eines nicht erfindungsgemäßen Druckkopfs,
- Figur 6: eine schematische Darstellung zur Verdeutlichung der räumlichen Entzerrung der Steuerventile in seitlicher Richtung,
- Figur 7: eine schematische Darstellung zur Verdeutlichung von Druckausgleichsmitteln in den einzelnen Strömungskanälen,
- Figur 8: eine schematische Darstellung zur Verdeutlichung der seitlichen Entzerrung der Steuerventile,
- Figur 9A: eine schematische Darstellung eines Beispiels eines nicht erfindungsgemäßen Druckkopfs mit einem Steuerventil mit einer stößelbetätigten Ventilmembran im geöffneten Zustand,
- Figur 9B: den Druckkopf gemäß Figur 9A in einer geschlossenen Stellung,
- Figur 10A: eine Abwandlung von Figur 9A mit einer Druckkammer zur Auslenkung der Ventilmembran, wobei die Ventilmembran im geöffneten Zustand gezeigt ist,
- Figur 10B: eine Abwandlung von Figur 10A im geschlossenen Zustand der Ventilmembran,
- Figur 11A: eine Abwandlung von Figur 9A mit einem separaten Ventilstößel, der durch eine Dichtungsmembran verschiebbar hindurchgeführt ist und im geöffneten Zustand gezeigt ist,
- Figur 11B: die Darstellung gemäß Figur 11A im geschlossenen Zustand des Steuerventils,
- Figur 12: eine Abwandlung von Figur 9A, wobei die Steuerventile außerhalb des Druckkopfs angeordnet sind,
- Figur 13: eine schematische Darstellung zur räumlichen Entzerrung der Steuerventile in verschiedenen Richtungen,
- Figur 14: eine schematische Darstellung zur räumlichen Entzerrung der Aktoren in vertikaler und horizontaler Richtung.

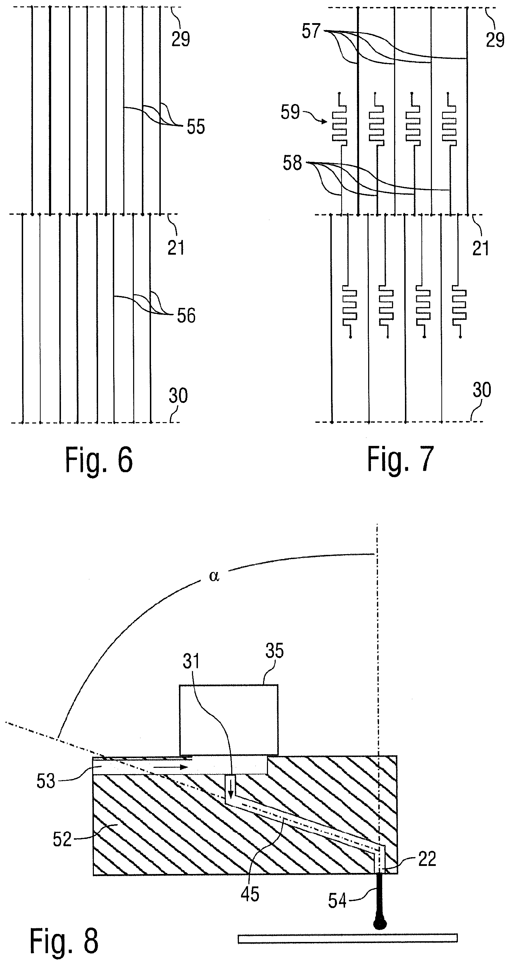

Im Folgenden wird nun unter Bezugnahme auf die Figuren 5 und 8 ein Beispiel eines nicht erfindungsgemäßen Druckkopfs beschrieben, der beispielsweise zur Lackierung von Kraftfahrzeugkarosseriebauteilen verwendet werden kann.

Hierbei sind in einer linearen Düsenreihe 21 zahlreiche Düsen 22-28 äquidistant angeordnet. Beiderseits der Düsenreihe 21 befinden sich hierbei parallele Ventilsitzreihen 29, 30.

In der Ventilsitzreihe 29 sind zahlreiche Ventilsitze 31-34 in einem Abstand a äquidistant angeordnet. Die Ventilsitze 31-34 werden jeweils durch Aktoren geöffnet bzw. geschlossen, wobei die Aktoren 35-38 jeweils eine nicht dargestellte Ventilnadel verschließen, um die Ventilsitze 31-34 individuell verschließen bzw. öffnen zu können.

In der gegenüberliegenden Ventilsitzreihe 30 sind ebenfalls mehrere Ventilsitze 39-41 in dem Abstand a äquidistant angeordnet. Diese Ventilsitze 39-41 werden ebenfalls über Aktoren 42-44 geschlossen bzw. geöffnet, wobei die Aktoren 42-44 jeweils eine nicht dargestellte Ventilnadel verschieben, um die Ventilsitze 39-41 zu öffnen bzw. zu schließen.

Die Ventilsitze 31-34 der in der Zeichnung oberen Ventilsitzreihe 29 sind hierbei jeweils durch Strömungskanäle 45-48 mit den zugehörigen Düsen 22, 24, 26, 28 verbunden.

Die Ventilsitze 39-41 der in der Zeichnung unteren Ventilsitzreihe 30 sind entsprechend über Strömungskanäle 49-51 mit den zugehörigen Düsen 23, 25, 27 verbunden.

Bei dieser Anordnung sind die Aktoren 35-38 gegenüber der Düsenreihe 21 in der Zeichnung nach oben versetzt, während die Aktoren 42-44 in der Zeichnung nach unten gegenüber der Düsenreihe 21 versetzt sind. Diese räumliche Entzerrung der Aktoren 35-38 bzw. 42-44 einerseits und der Düsenreihe 21 andererseits ermöglicht eine Verringerung des Düsenabstands d unter den Abstand a zwischen den benachbarten Aktoren 35-38 bzw. 42-44. Insbesondere kann der Düsenabstand d der benachbarten Düsen 22-28 auch kleiner sein als der Durchmesser b der einzelnen Aktoren 35-38 bzw. 42-44.

Aus der Querschnittsansicht in Figur 8 ist auch ersichtlich, dass der Strömungskanal 45 wie auch die anderen Strömungskanäle in einem Substrat 52 verlaufen, wobei in die Oberseite des Substrats 52 ein Versorgungskanal 53 eingebettet ist, der die Ventilsitze 31-34 mit dem Beschichtungsmittel versorgt.

Weiterhin ist aus Figur 8 ersichtlich, dass der Strömungskanal 45 auf einem Teil seiner Länge in einem Winkel α relativ zu einem Beschichtungsmittelstrahl 54 verläuft, der aus der Düse 22 abgegeben wird. Der Winkel α kann im Bereich von 0°-90° liegen, insbesondere 0° oder 45°.

Figur 6 zeigt eine schematische Darstellung einer derartigen Druckkopfanordnung mit seitlich versetzt angeordneten Ventilsitzen, die gegenüber der Düsenreihe 21 in den beiden Ventilsitzreihen 29, 30 angeordnet sind.

Teilweise stimmte diese Darstellung mit den vorangehenden Zeichnungen überein, so dass zur Vermeidung von Wiederholungen auf die vorstehende Beschreibung verwiesen wird, wobei für entsprechende Einzelheiten dieselben Bezugszeichen verwendet werden.

Hierbei sind Strömungskanäle 55, 56 vorgesehen, die alle gleich lang sind. Dies bietet den Vorteil, dass der Strömungswiderstand der Strömungskanäle 55, 56 einheitlich ist, so dass das Applikationsverhalten der einzelnen Düsen ebenfalls einheitlich ist.

Figur 7 zeigt eine Abwandlung der schematischen Darstellung gemäß Figur 6, so dass zunächst zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Druckkopf lange Strömungskanäle 57 und kurze Strömungskanäle 58 aufweist. Dies ist problematisch, weil der Strömungswiderstand der kurzen Strömungskanäle 58 in der Regel geringer ist als der Strömungswiderstand der langen Strömungskanäle 57, was zu einem entsprechend unterschiedlichen Applikationsverhalten führen würde. In den kurzen Strömungskanälen 58 sind deshalb hierbei Druckausgleichsmittel 59 angeordnet, die in diesem Ausführungsbeispiel aus einem mäanderförmigen Verlauf der kurzen Strömungskanäle 58 bestehen.

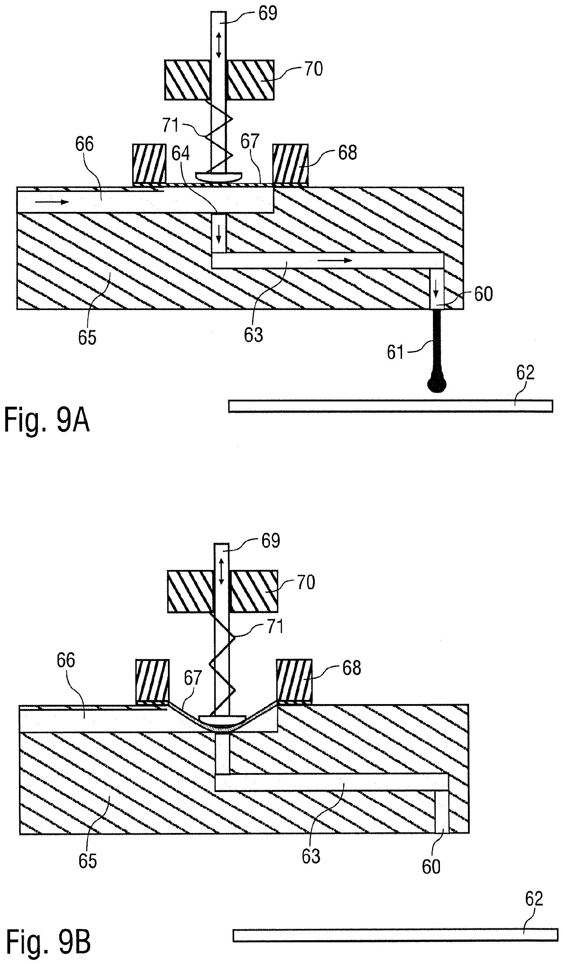

Im Folgenden wird nun das Ausführungsbeispiel gemäß den Figuren 9A und 9B beschrieben, wobei Figur 9A eine geöffnete Stellung eines Steuerventils zeigt, während Figur 9B eine geschlossene Stellung des Steuerventils zeigt.

Die Zeichnungen zeigen eine schematische Detaildarstellung des Druckkopfs im Bereich einer Düse 60, wobei durch die Düse 60 ein Beschichtungsmittelstrahl 61 auf ein Bauteil 62 abgegeben werden kann.

Die Düse 60 ist hierbei über einen Strömungskanal 63 mit einem zu der Düse 60 seitlich versetzten Ventilsitz 64 verbunden, wobei der Strömungskanal 63 in einem Substrat 65 verläuft. In die Oberfläche des Substrats 65 ist ein Versorgungskanal 66 eingebettet, der zu dem Ventilsitz 64 führt.

Darüber hinaus ist an der Oberseite des Substrats 65 eine Ventilmembran 67 mittels einer Membranklemmung 68 fixiert, wobei die Ventilmembran 67 zwischen der Öffnungsstellung gemäß Figur 9A und der Schließstellung gemäß Figur 9B auslenkbar ist.

Zum Auslenken der Ventilmembran 67 dient ein Ventilstößel 69, der in einer Stößelführung 70 verschiebbar geführt ist und von einem Aktor in Richtung des Doppelpfeils verschoben werden kann.

Der Ventilstößel 69 wird von einer Rückstellfeder 71 nach unten in die Schließstellung gedrückt. In der Schließstellung gemäß Figur 9B drückt der Ventilstößel 69 die Ventilmembran 67 auf den Ventilsitz 64 und dichtet diesen dadurch ab.

Der seitliche Versatz zwischen der Düse 60 und dem Ventilsitz 64 ermöglicht es hierbei, dass der Düsenabstand zwischen den benachbarten Düsen (d.h. rechtwinklig zur Zeichenebene) verringert wird.

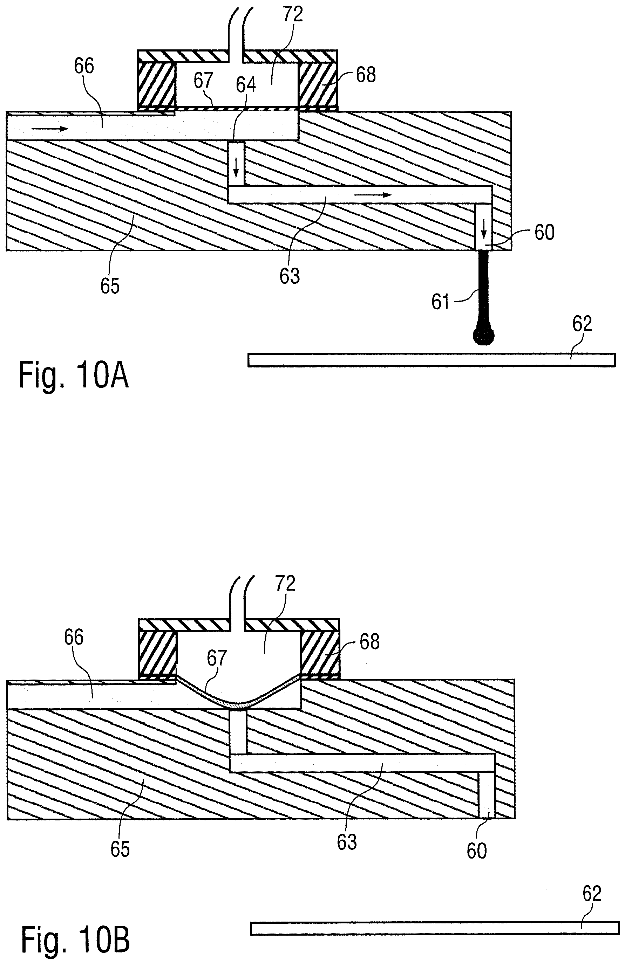

Die Figuren 10A und 10B zeigen eine Abwandlung des Beispiels gemäß den Figuren 9A und 9B, so dass zur Vermeidung von Wiederholungen auf die vorstehende Beschreibung verwiesen wird, wobei für entsprechende Einzelheiten dieselben Bezugszeichen verwendet werden. Eine Besonderheit dieses Ausführungsbeispiels besteht darin, dass die Ventilmembran 67 nicht durch den Stößel 69 ausgelenkt wird, sondern durch den Druck in einer Druckkammer 72, die mit Druckluft beaufschlagt werden kann.

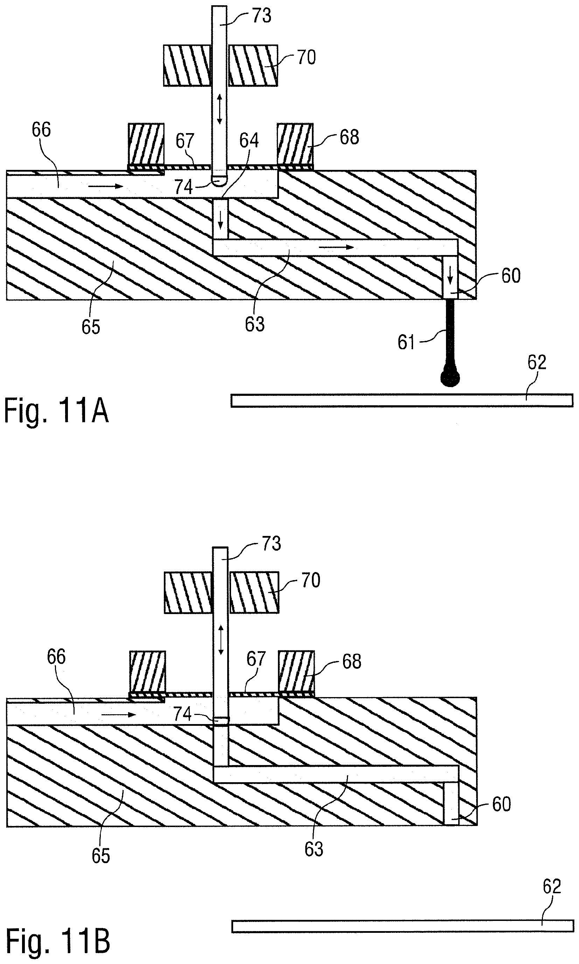

Die Figuren 11A und 11B zeigen eine weitere Abwandlung des Beispiels gemäß den Figuren 9A und 9B, so dass zur Vermeidung von Wiederholungen zunächst wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Ventilsitz 64 hierbei nicht von der Ventilmembran 67 verschlossen wird. Vielmehr ist hierbei durch die Ventilmembran 67 eine Ventilnadel 73 hindurchgeführt, die in Richtung des Doppelpfeils verschiebbar ist und an ihrer Spitze ein separates Dichtelement 74 trägt. In der Schließstellung gemäß Fig. 11B dichtet das Dichtelement 74 dann den Ventilsitz 64 ab. In der Öffnungsstellung gemäß Figur 11A ist die Ventilnadel 73 dagegen mit dem Dichtelement 74 von dem Ventilsitz 64 abgehoben und gibt diesen dadurch frei.

Die Ventilmembran 67 hat hierbei nur die Funktion, den beschichtungsmittelgefüllten Versorgungskanal 66 von einem Aktorraum zu trennen, damit der Aktorraum nicht von dem Beschichtungsmittel in dem Versorgungskanal 66 kontaminiert wird.

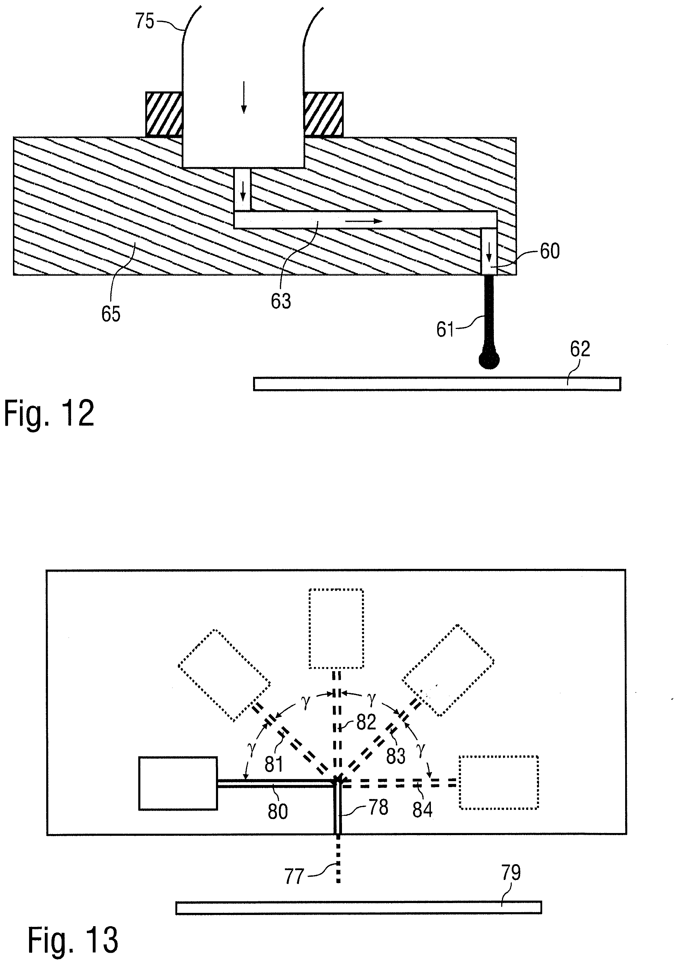

Figur 12 zeigt eine weitere Abwandlung des Beispiels gemäß den Figuren 9A und 9B, so dass zur Vermeidung von Wiederholungen wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass hierbei die Steuerventile von dem Druckkopf getrennt sind und über einen Schlauch 75 mit dem Druckkopf verbunden werden.

Figur 13 zeigt ein weiteres mögliches Ausführungsbeispiel eines Druckkopfs 76 zur Applikation eines Beschichtungsmittelstrahls 77 aus einer Düse 78 auf ein Bauteil 79.

Hierbei sind die Düsen 78 entlang der Düsenreihe (d.h. rechtwinklig zur Zeichenebene) über Strömungskanäle 80-84 abwechselnd mit Ventilsitzen in verschiedenen Winkelausrichtungen verbunden. Die Zeichenebene bildet hierbei also eine Entzerrungsebene, wobei die Strömungskanäle 80-84 in verschiedene Richtungen weisen und dadurch eine räumliche Entzerrung ermöglichen, was wiederum eine Verringerung des Düsenabstands d erlaubt.

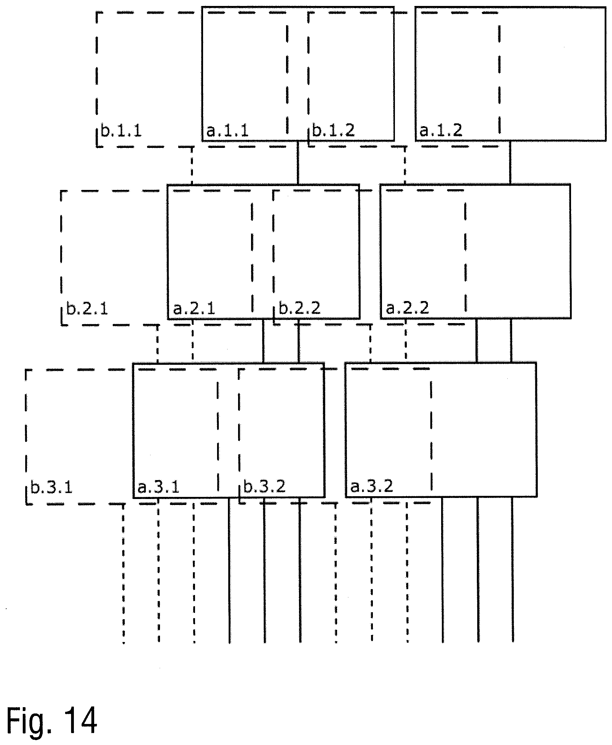

Figur 14 zeigt schließlich eine schematische Darstellung zur Erläuterung der räumlichen Entzerrung von Aktoren und zwar sowohl in vertikaler Richtung (d.h. rechtwinklig zur Düsenebene) als auch in horizontaler Richtung (d.h. parallel zur Düsenebene).

Hierbei sind in drei exemplarisch dargestellten Aktorebenen übereinander jeweils zwei Aktorreihen parallel zueinander und parallel zur Düsenreihe angeordnet.

In der oberen Aktorebene umfasst die rechte Aktorreihe exemplarisch zwei Aktoren a.1.1 und a.1.2, während die andere Aktorreihe exemplarisch zwei Aktoren b.1.1 und b.1.2 aufweist.

Das Gleiche gilt für die mittlere Aktorebene, die ebenfalls zwei Aktorreihen mit jeweils zwei Aktoren a.2.1, a.2.2 bzw. b.2.1 bzw. b.2.2 aufweist.

Schließlich enthält auch die untere Aktorebene zwei Aktorreihen mit exemplarisch jeweils zwei Aktoren a.3.1, a.3.2 bzw. b.3.1, b.3.2.

Hierbei ist zu erwähnen, dass die Anzahl der Aktoren in den einzelnen Aktorreihen in der Praxis wesentlich größer ist als vorstehend zur Veranschaulichung dargestellt und beschrieben wurde.

### Bezugszeichenliste:

- 1: Düsenplatte
- 2-4: Düsen
- 5: Düsenreihe
- 6: Bauteil
- 7-9: Aktoren
- 10-12: Ventilnadeln
- 13: Dichtungsmembran
- 14: Düsenraum
- 15: Aktorraum
- 16: Membranentkopplung
- 17-19: Beschichtungsmitteltröpfchen
- 20: Drehachse
- 21: Düsenreihe
- 22-28: Düsen
- 29, 30: Ventilsitzreihen
- 31-34: Ventilsitze
- 35-38: Aktoren
- 39-41: Ventilsitze
- 42-44: Aktoren
- 45-48: Strömungskanäle
- 49-51: Strömungskanäle
- 52: Substrat
- 53: Versorgungskanal
- 54: Beschichtungsmittelstrahl
- 55, 56: Strömungskanäle
- 57: Lange Strömungskanäle
- 58: Kurze Strömungskanäle
- 59: Druckausgleichsmittel
- 60: Düse
- 61: Beschichtungsmittelstrahl
- 62: Bauteil
- 63: Strömungskanal
- 64: Ventilsitz
- 65: Substrat
- 66: Versorgungskanal
- 67: Ventilmembran
- 68: Membranklemmung
- 69: Ventilstößel
- 70: Stößelführung
- 71: Rückstellfeder
- 72: Druckkammer
- 73: Ventilnadel
- 74: Dichtelement der Ventilnadel
- 75: Schlauch
- 76: Druckkopf
- 77: Beschichtungsmittelstrahl
- 78: Düse
- 79: Bauteil
- 80-84: Strömungskanäle
- a.1.1: Aktor der rechten Aktorreihe der oberen Aktorebene
- a.1.2: Aktor der rechten Aktorreihe der oberen Aktorebene
- b.1.1: Aktor der linken Aktorreihe der oberen Aktorebene
- b.1.2: Aktor der linken Aktorreihe der oberen Aktorebene
- a.2.1: Aktor der rechten Aktorreihe der mittleren Aktorebene
- a.2.2: Aktor der rechten Aktorreihe der mittleren Aktorebene
- b.2.1: Aktor der linken Aktorreihe der mittleren Aktorebene
- b.2.2: Aktor der linken Aktorreihe der mittleren Aktorebene
- a.3.1: Aktor der rechten Aktorreihe der unteren Aktorebene
- a.3.2: Aktor der rechten Aktorreihe der unteren Aktorebene
- b.3.1: Aktor der linken Aktorreihe der unteren Aktorebene
- b.3.2: Aktor der linken Aktorreihe der unteren Aktorebene
- α: Winkel zwischen Strömungskanal und Beschichtungsmittelstrahl
- β: Winkel zwischen Strömungskanal und Düsenreihe
- a: Abstand der benachbarten Aktoren
- b: Durchmesser der Aktoren
- d: Düsenabstand

## Patentansprüche

1. Applikator, insbesondere Druckkopf, zur Applikation eines Beschichtungsmittels, insbesondere eines Lacks, auf ein Bauteil, insbesondere auf ein Kraftfahrzeugkarosseriebauteil oder ein Anbauteil für ein Kraftfahrzeugkarosseriebauteil, mit
a) mindestens einer Düsenreihe (21) mit mehreren Düsen (22-28; 60; 78) zur Abgabe des Beschichtungsmittels in Form eines Beschichtungsmittelstrahls (54; 61; 77), wobei die Düsen (22-28; 60; 78) entlang jeder Düsenreihe (21) in einem bestimmten Düsenabstand (d) hintereinander in einer Düsenebene angeordnet sind, und
b) mehreren Aktoren (a.1.1-b.3.2) zur Steuerung der Beschichtungsmittelabgabe durch die einzelnen Düsen (22-28; 60; 78),
b1) wobei die Aktoren (a.1.1-b.3.2) jeweils eine Außenabmessung (b) entlang der jeweiligen Düsenreihe (21) haben,
b2) wobei die Aktoren (a.1.1-b.3.2) in mehreren Aktorebenen angeordnet sind, wobei die einzelnen Aktorebenen parallel zu der Düsenebene in verschiedenen Abständen zu der Düsenebene verlaufen,
c) wobei der Düsenabstand (d) zwischen den benachbarten Düsen (22-28; 60; 78) jeder Düsenreihe (21) kleiner ist als die Außenabmessung (b) der einzelnen Aktoren (a.1.1-b.3.2) entlang der jeweiligen Düsenreihe (21),
d) wobei die Aktoren (a.1.1-b.3.2) in den einzelnen Aktorebenen jeweils in mehreren Aktorreihen parallel zu der jeweiligen Düsenreihe (21) angeordnet sind, insbesondere beiderseits der jeweiligen Düsenreihe (21),
**dadurch gekennzeichnet,**
e) **dass** die vertikal übereinander angeordneten Aktoren zueinander einen horizontalen Versatz haben, der im Wesentlichen gleich groß ist wie der Düsenabstand (d) zwischen den benachbarten Düsen in der Düsenreihe oder einem ganzzahligen Vielfachen des Düsenabstands entspricht.

2. Applikator nach Anspruch 1, **dadurch gekennzeichnet,**
a) **dass** der Applikator mehrere Steuerventile (31-34, 39-41) zur Steuerung der Beschichtungsmittelabgabe durch die Düsen (2-4) aufweist, wobei die Steuerventile (31-34, 39-41) von den Aktoren (a.1.1-b.3.2) angesteuert werden,
b) **dass** die Steuerventile (31-34, 39-41) jeweils von der zugehörigen Düse (22-28) räumlich getrennt und jeweils über einen Strömungskanal (45-51) mit der zugehörigen Düse (22-28) verbunden sind, um eine räumliche Entzerrung der Düsen (22-28) einerseits und der Steuerventile andererseits zu ermöglichen, und
c) **dass** die Steuerventile (31-34, 39-41) mit ihrer Absperrstelle seitlich gegenüber der jeweiligen Düsenreihe (21) versetzt angeordnet sind, um den Düsenabstand (d) verringern zu können.

3. Applikator nach Anspruch 2, **dadurch gekennzeichnet,**
a) **dass** die Steuerventile (31-34, 39-41) beiderseits der jeweiligen Düsenreihe (21) in zwei bezüglich der jeweiligen Düsenreihe (21) gegenüber liegenden Ventilreihen (29, 30) angeordnet sind, und
b) **dass** die Düsen (22-28) entlang der jeweiligen Düsenreihe (21) abwechselnd über die Strömungskanäle (45-51) mit Steuerventilen (31-34, 39-41) der gegenüber liegenden Ventilreihen (29, 30) verbunden sind.

4. Applikator nach Anspruch 2, **dadurch gekennzeichnet,**
a) **dass** die Strömungskanäle (80-84) von der jeweiligen Düsenreihe ausgehend in einer Entzerrungsebene rechtwinklig zu der jeweiligen Düsenreihe in mehr als zwei verschiedene Richtungen abgehen, und/oder
b) **dass** die verschiedenen Richtungen der Strömungskanäle (80-84) in der Entzerrungsebene jeweils einen Winkel von 20°-70°, 30°-60°, 40°-50° oder 45° einschließen, und
c) **dass** die Düsen (78) entlang der jeweiligen Düsenreihe abwechselnd mit einem der verschiedenen Strömungskanäle (80-84) verbunden sind.

5. Applikator nach einem der vorhergehenden Ansprüche,
**dadurch gekennzeichnet,**
a) **dass** die einzelnen Aktorebenen parallel zu der Düsenebene verlaufen, und
b) **dass** in den einzelnen Aktorebenen jeweils zwei Aktorreihen beiderseits der jeweiligen Düsenreihe angeordnet sind, wobei die Aktorreihen jeweils mehrere Aktoren (a.1.1-b.3.2) enthalten,
c) **dass** die Aktoren in den Aktorreihen im Wesentlichen äquidistant angeordnet sind.

6. Applikator nach einem der Ansprüche 2 bis 5, wenn abhängig vom Anspruch 2,
**dadurch gekennzeichnet,**
a) **dass** der Abstand zwischen den Steuerventilen und den zugehörigen Düsen teilweise unterschiedlich sind, so dass die Strömungskanäle (57, 58) teilweise unterschiedliche Abstände überbrücken, und
b) **dass** die Strömungskanäle (57, 58) zur Kompensation der unterschiedlichen Abstände Druckausgleichsmittel (59) aufweisen, wobei die Druckausgleichsmittel (59) die unterschiedlichen Druckverluste entlang den unterschiedlich langen Strömungskanälen (57, 58) mindestens teilweise kompensieren, und
c) **dass** die Druckausgleichsmittel (59) folgendes umfassen, insbesondere bei den Strömungskanälen mit den kürzeren Abständen von Düse zu dem Ventilsitz:
c1) einen mäanderförmigen Verlauf,
c2) einen zickzackförmigen Kanalverlauf,
c3) einen spiralförmigen Kanalverlauf, und/oder
c4) eine Kanalengstelle.

7. Applikator nach einem der Ansprüche 2 bis 6, wenn abhängig vom Anspruch 2,
**dadurch gekennzeichnet,**
a) **dass** die einzelnen Steuerventile jeweils einen Ventilsitz (31-34, 39-41; 64) aufweisen, der wahlweise verschlossen oder freigegeben werden kann, und
b) **dass** die einzelnen Ventilsitze (31-34, 39-41; 64) jeweils einen lichten Durchmesser von 50µm-1500µm aufweisen, und/oder
c) **dass** ein auslenkbares Ventilelement (67), insbesondere eine Ventilmembran (67), vorgesehen ist, wobei dieses Ventilelement (67) den Ventilsitz (64) in Abhängigkeit von ihrer Auslenkung wahlweise freigibt oder verschließt, und
d) **dass** zum Auslenken des Ventilelements (67)
d1) ein verschiebbarer Stößel (6) vorgesehen ist, der in einer Schließstellung das Ventilelement (67) gegen den Ventilsitz (64) drückt und diesen dadurch abdichtet, oder
d2) eine Druckkammer (72) vorgesehen ist, wobei die Druckkammer (72) das Ventilelement (67) mit einem einstellbaren Druck beaufschlagt, um das Ventilelement (67) wahlweise gegen den Ventilsitz (64) zu drücken und diesen dadurch abzudichten oder den Ventilsitz (64) freizugeben

8. Applikator nach Anspruch 7, **dadurch gekennzeichnet,**
a) **dass** eine verschiebbare Ventilnadel (73) vorgesehen ist, wobei die Ventilnadel (73) den Ventilsitz (64) in Abhängigkeit von ihrer Position wahlweise freigibt oder verschließt, und
b) **dass** die Ventilnadel (73) durch ein Dichtelement (67) hindurchgeführt ist, insbesondere durch eine Dichtungsmembran (67), wobei das Dichtelement (67) einen Aktorraum von einem beschichtungsmittelgefüllten Zuleitungsraum trennt und dadurch verhindert, dass die Aktoren in dem Aktorraum von dem Beschichtungsmittel kontaminiert werden, und
c) **dass** die Ventilnadel (73) an ihrer Spitze ein separates Dichtungselement (74) aufweist,
d) **dass** die Ventilnadel (73) jeweils von einem der Aktoren (a.1.1-b.3.2) verschoben werden, insbesondere von
d1) einem elektromagnetischen Aktor,
d2) einem piezoelektrischen Aktor, oder
d3) einem pneumatischen Aktor,
e) **dass** die Aktoren (a.1.1-b.3.2)
e1) jeweils einfach wirkend sind und die Ventilnadel (73) oder den Stößel (69) nur in eine einzige Richtung aktiv bewegen, wohingegen die Ventilnadel (73) oder der Stößel (69) in der entgegengesetzten Richtung von einer Rückstellfeder (71) bewegt wird, oder
e2) jeweils doppelt wirkend sind und die Ventilnadel (73) oder den Stößel (69) in beide Richtungen aktiv bewegen.

9. Applikator nach einem der Ansprüche 2 bis 8, wenn abhängig vom Anspruch 2,
**dadurch gekennzeichnet, dass** die Steuerventile außerhalb des Applikators angeordnet und durch eine Fluidleitung (75), insbesondere einen Schlauch (75), mit dem Applikator verbunden sind.

10. Applikator nach einem der Ansprüche 2 bis 9, wenn abhängig vom Anspruch 2,
**dadurch gekennzeichnet,**
a) **dass** die Strömungskanäle (45-51; 63; 80-84) aus einem Versorgungskanal (66, 53) mit dem Beschichtungsmittel gespeist werden, und
b) **dass** der Versorgungskanal (66, 53) eine Kanalhöhe von 100µm-2000µm aufweist, und
c) **dass** der Versorgungskanal (66, 53) eine Kanalbreite von 1mm-5mm aufweist, und
d) **dass** der Versorgungskanal (66, 53) eine Kanallänge von1mm-100mm aufweist.

11. Applikator nach einem der Ansprüche 7 bis 10, wenn abhängig vom Anspruch 7, **dadurch gekennzeichnet,**
a) **dass** die benachbarten Ventilsitze (31-34, 39-41; 64) der Steuerventile parallel zu der jeweiligen Düsenreihe (21) in einem ersten Abstand (a) angeordnet sind,
b) **dass** die benachbarten Düsen (22-28; 60; 78) entlang der jeweiligen Düsenreihe (21) in einem zweiten Abstand (d) angeordnet sind, und
c) **dass** der erste Abstand (a) zwischen den benachbarten Ventilsitzen mindestens doppelt so groß ist wie der zweite Abstand (d) zwischen den benachbarten Düsen (22-28; 60; 78).

12. Applikator nach einem der Ansprüche 2 bis 11, wenn abhängig vom Anspruch 2,
**dadurch gekennzeichnet,** der Strömungskanal (45-51; 63; 80-84) in einem Substrat (65) verlaufen, das aus einem Material besteht, das gegenüber dem Beschichtungsmittel inert ist, insbesondere aus einem der folgenden Materialien:
a) Edelstahl,
b) Kunststoff, insbesondere
b1) Polyetheretherketon (PEEK),
b2) Polyetherketon (PEKK),
b3) Polyoxymethylen (POM),
b4) Polymethylmethacrylat (PMMA),
b5) Polyamid (PA),
b6) Polyethylen (PE),
b7) Polypropylen (PP),
b8) Polystyrol (PS),
b9) Polycarbonat (PC),
b10) Cycloolefin-Copolymere, insbesondere Topas®, Zeonor® oder Zeonex®,
c) Silizium,
d) Glas.

13. Applikator nach einem der Ansprüche 2 bis 12, wenn abhängig vom Anspruch 2,
**dadurch gekennzeichnet,**
a) **dass** die Strömungskanäle (45-51; 63; 80-84) mindestens auf einem Teil ihrer Länge einen Winkel (α) von 0°-90°, 20°-85°, 45°-80° mit dem Beschichtungsmittelstrahl (54; 61; 77) einschließen, und/oder
b) **dass** die Strömungskanäle (45-51; 63; 80-84) mindestens auf einem Teil ihrer Länge in einem Winkel (α) von 0°-90° oder 45°-90° oder quer, insbesondere rechtwinklig, zu der jeweiligen Düsenreihe (21) verlaufen, und/oder
c) **dass** die Strömungskanäle (45-51; 63; 80-84) mindestens auf einem Teil ihrer Länge in einem Winkel (α) von 0°-90° oder 45°-90°, insbesondere rechtwinklig, zu dem Beschichtungsmittelstrahl (54; 61; 77) und orthogonal zu der jeweiligen Düsenreihe (21) verlaufen, und/oder
d) **dass** die Strömungskanäle (45-51; 63; 80-84) jeweils einen Kanalquerschnitt mit einer Kanalhöhe von 50µm-1000µm oder 100µm-500µm aufweisen, und/oder
e) **dass** die Strömungskanäle jeweils einen Kanalquerschnitt mit einer Kanalbreite von 50µm-1000µm oder 100µm-500µm aufweisen, und/oder
f) **dass** die Strömungskanäle (45-51; 63; 80-84) jeweils eine Kanallänge von 0,1mm-50mm oder 0,5mm-25mm aufweisen, und/oder
g) **dass** die Strömungskanäle (45-51; 63; 80-84) einen runden Kanalquerschnitt aufweisen, insbesondere mit einem Kanaldurchmesser von 50µm-1000µm, und/oder
h) **dass** die Strömungskanäle (45-51; 63; 80-84) zwischen der Absperrstelle der Steuerventile und den Düsen (22-28; 60; 78) jeweils ein kleines Volumen von weniger als 1mL, 0,5mL, 0,1mL, 0,01ml, 0,001ml aufweisen, und/oder
i) **dass** der Düsenabstand (d) entlang der jeweiligen Düsenreihe (21) kleiner ist als 3mm, 2mm, 1mm oder 0,5mm, und/oder
j) **dass** die Steuerventile in einem Abstand von mindestens 1mm, 2mm, 3mm, 4mm, 5mm oder 6mm zu der jeweiligen Düsenreihe (21) angeordnet sind, und/oder
k) **dass** die Düsen (22-28; 60; 78) entlang der jeweiligen Düsenreihe (21) äquidistant angeordnet sind.

14. Beschichtungsroboter, insbesondere Lackierroboter, mit einem Applikator nach einem der vorhergehenden Ansprüche.

## Claims

1. Applicator, in particular printhead, for applying a coating agent, in particular a paint, to a component, in particular to a motor vehicle body component or an add-on part for a motor vehicle body component, having
a) at least one nozzle row (21) having a plurality of nozzles (22-28; 60; 78) for dispensing the coating agent in the form of a coating agent jet (54; 61; 77), the nozzles (22-28; 60; 78) being arranged one behind the other along each nozzle row (21) at a specific nozzle spacing (d) in a nozzle plane, and
b) a plurality of actuators (a.1.1-b.3.2) for controlling the release of the coating agent through the individual nozzles (22-28; 60; 78),
b1) wherein the actuators (a.1.1-b.3.2) each having an outer dimension (b) along the respective nozzle row (21),
b2) wherein the actuators (a.1.1-b.3.2) are arranged in a plurality of actuator planes, wherein the individual actuator planes extending parallel to the nozzle plane at different distances from the nozzle plane,
c) wherein the nozzle spacing (d) between the adjacent nozzles (22-28; 60; 78) of the nozzle row (21) is smaller than the outer dimension (b) of the individual actuators (a.1.1-b.3.2) along the respective nozzle row (21),
d) wherein the actuators (a.1.1-b.3.2) in the individual actuator planes are each arranged in a plurality of actuator rows parallel to the nozzle row (21), in particular on both sides of the respective nozzle row (21),
**characterized in**
e) **that** the actuators arranged vertically one above the other have a horizontal offset with respect to one another which is substantially equal in magnitude to the nozzle spacing (d) between the adjacent nozzles in the nozzle row or corresponds to an integer multiple of the nozzle spacing.

2. Applicator according to claim 1, **characterized in**
a) **that** the applicator has a plurality of control valves (31-34, 39-41) for controlling the release of the coating agent through the nozzles (2-4), the control valves (31-34, 39-41) being driven by the actuators (a.1.1-b.3.2),
b) **that** the control valves (31-34, 39-41) are each spatially separated from the associated nozzle (22-28) and are each connected to the associated nozzle (22-28) via a flow channel (45-51) in order to enable spatial pulling-apart of the nozzles (22-28) on the one hand and of the control valves on the other hand, and
c) **that** the control valves (31-34, 39-41) are arranged with their shut-off point offset laterally with respect to the nozzle row (21) in order to be able to reduce the nozzle spacing (d).

3. Applicator according to claim 2, **characterized in**
a) **that** the control valves (31-34, 39-41) are arranged on either side of the respective nozzle row (21) in two valve rows (29, 30) which are opposite one another with respect to the respective nozzle row (21), and
b) **that** the nozzles (22-28) are connected along the nozzle row (21) alternately via the flow channels (45-51) to control valves (31-34, 39-41) of the opposite valve rows (29, 30).

4. Applicator according to claim 2, **characterized in**
a) **that** the flow channels (80-84) depart from the respective nozzle row in a pulling-apart plane at right angles to the respective nozzle row in more than two different directions, and/or
b) **that** the different directions of the flow channels (80-84) in the pulling-apart plane each include an angle of 20°-70°, 30°-60°, 40°-50° or 45°, and
c) **that** the nozzles (78) are connected to one of the different flow channels (80-84) alternately along the respective nozzle row.

5. Applicator according to any of the preceding claims, **characterized in**
a) **that** the individual actuator planes extend parallel to the nozzle plane, and
b) **that** two actuator rows are arranged in each of the individual actuator planes on either side of the respective nozzle row, the actuator rows each containing a plurality of actuators (a.1.1-b.3.2), and/or
c) **that** the actuators in the actuator rows are arranged substantially equidistantly.

6. Applicator according to one of claims 2 to 5, if dependent on claim 2, **characterized in**
a) **that** the distance between the control valves and the associated nozzles is partly different, so that the flow channels (57, 58) bridge partly different distances, and
b) **that** the flow channels (57, 58) have pressure compensation means (59) for compensating the different distances, the pressure compensation means (59) at least partially compensating the different pressure losses along the flow channels (57, 58) of different lengths, and
c) **that** the pressure compensation means (59) comprise the following, in particular in the flow channels with the shorter distances from the nozzle to the valve seat:
c1) a meandering course,
c2) a zigzag channel shape,
c3) a spiral channel shape; and/or
c4) a channel narrowing.

7. Applicator according to one of claims 2 to 6, if dependent on claim 2, **characterized in,**
a) **that** the individual control valves each have a valve seat (31-34, 39-41; 64), which can be selectively closed or released, and
b) **that** the individual valve seats (31-34, 39-41; 64) each have a clear diameter of 50µm-1500µm, and/or
c) **that** a deflectable valve element (67), in particular a valve membrane (67), is provided, this valve element (67) selectively releasing or closing the valve seat (64) as a function of its deflection, and
d) **that** for the deflection of the valve element (67)
d1) a displaceable plunger (6) is provided which, in a closed position, presses the valve element (67) against the valve seat (64) and thereby seals the latter, or
d2) a pressure chamber (72) is provided, the pressure chamber (72) applying an adjustable pressure to the valve element (67) in order to selectively press the valve element (67) against the valve seat (64) and thereby seal it or release the valve seat (64).

8. Applicator according to claim 7, **characterized in**
a) **that** a displaceable valve needle (73) is provided, the valve needle (73) selectively releasing or closing the valve seat (64) as a function of its position, and
b) **that** the valve needle (73) is passed through a sealing element (67), in particular through a sealing membrane (67), the sealing element (67) separating an actuator chamber from a feed line chamber filled with coating agent and thereby preventing the actuators in the actuator chamber from being contaminated by the coating agent, and
c) **that** the valve needle (73) has a separate sealing element (74) at its tip,
d) **that** the valve needle (73) is displaced by one of the actuators (a.1.1-b.3.2), in particular by
d1) an electromagnetic actuator,
d2) a piezoelectric actuator; or
d3) a pneumatic actuator,
e) **that** the actuators (a.1.1-b.3.2) are
e1) each single-acting and actively move the valve needle (73) or the plunger (69) only in one direction, whereas the valve needle (73) or the plunger (69) is moved in the opposite direction by a return spring (71), or
e2) each double-acting and actively move the valve needle (73) or the plunger (69) in both directions.

9. Applicator according to one claims 2 to 8, if dependent on claim 2, **characterized in that** the control valves are arranged outside the applicator and are connected to the applicator by a fluid line (75), in particular a hose (75).

10. Applicator according to one of claims 2 to 9, if dependent on claim 2, **characterized in**
a) **that** the flow channels (45-51; 63; 80-84) are fed with the coating agent from a supply channel (66, 53), and
b) **that** the supply channel (66, 53) has a channel height of 100µm-2000µm, and
c) **that** the supply channel (66, 53) has a channel width of 1mm-5mm, and
d) **that** the supply channel (66, 53) has a channel length of 1mm-100mm.

11. Applicator according to one of claims 7 to 10, if dependent on claim 7, **characterized in**
a) **that** the adjacent valve seats (31-34, 39-41; 64) of the control valves are arranged parallel to the resepective nozzle row (21) at a first spacing (a),
b) **that** the adjacent nozzles (22-28; 60; 78) are arranged along the resepective nozzle row (21) at a second distance (d), and
c) **that** the first distance (a) between the adjacent valve seats is at least twice as large as the second distance (d) between the adjacent nozzles (22-28; 60; 78).

12. Applicator according to one of claims 2 to 11, if dependent on claim 2, **characterized in that** the flow channel (45-51; 63; 80-84) extends in a substrate (65) made of a material which is inert towards the coating agent, in particular one of the following materials:
a) stainless steel,
b) plastic, in particular
b1) polyether ether ketone (PEEK),
b2) polyether ketone (PEKK),
b3) polyoxymethylene (POM),
b4) polymethyl methacrylate (PMMA),
b5) polyamide (PA),
b6) polyethylene (PE),
b7) Polypropylene (PP),
b8) polystyrene (PS),
b9) Polycarbonate (PC),
b10) cycloolefin copolymers, in particular Topaz®, Zeonor® or Zeonex®,
c) silicon,
d) glass.

13. Applicator according to one of claims 2 to 12, if dependent on claim 2, **characterized in**
a) **that** the flow channels (45-51; 63; 80-84) include an angle (α) of 0°-90°, 20°-85°, 45°-80° with the coating agent jet (54; 61; 77) at least over part of their length, and/or
b) **that** the flow channels (45-51; 63; 80-84) extend over at least part of their length at an angle (α) of 0°-90° or 45°-90° or transversely, in particular at right angles, to the respective nozzle row (21), and/or
c) **that** the flow channels (45-51; 63; 80-84) extend over at least part of their length at an angle (α) of 0°-90° or 45°-90°, in particular at right angles, to the coating agent jet (54; 61; 77) and orthogonal to the respective nozzle row (21), and/or
d) **that** the flow channels (45-51; 63; 80-84) each have a channel cross-section with a channel height of 50µm-1000µm or 100µm-500µm, and/or
e) **that** the flow channels each have a channel cross-section with a channel width of 50m-1000m or 100µm-500µm, and/or
f) **that** the flow channels (45-51; 63; 80-84) each have a channel length of 0.1mm-50mm or 0.5mm-25mm, and/or
g) **that** the flow channels (45-51; 63; 80-84) have a round channel cross-section, in particular with a channel diameter of 50µm-1000µm, and/or
h) **that** the flow channels (45-51; 63; 80-84) between the shut-off point of the control valves and the nozzles (22-28; 60; 78) each have a small volume of less than 1mL, 0.5mL, 0.1mL, 0.01ml, 0.001ml, and/or
i) **that** the nozzle spacing (d) along the respective nozzle row (21) is smaller than 3mm, 2mm, 1mm or 0.5mm, and/or
j) **that** the control valves are arranged at a distance of at least 1mm, 2mm, 3mm, 4mm, 5mm or 6mm from the respective nozzle row (21), and/or
k) **that** the nozzles (22-28; 60; 78) are arranged equidistantly along the respective nozzle row (21).

14. Coating robot, in particular painting robot, having an applicator according to one of the preceding claims.

## Revendications

1. Applicateur, plus particulièrement tête d'impression, pour l'application d'un produit de revêtement, plus particulièrement d'une peinture, sur un composant, plus particulièrement sur un composant de carrosserie de véhicule automobile ou une pièce rapportée pour un composant de carrosserie de véhicule automobile, avec
a) au moins une rangée de buses (21) avec plusieurs buses (22 - 28 ; 60 ; 78) pour la distribution du produit de revêtement sous la forme d'un jet de produit de revêtement (54 ; 61 ; 77), dans lequel les buses (22 - 28 ; 60 ; 78) sont disposées le long de chaque rangée de buses (21) successivement dans un plan de buse, avec une distance déterminée entre les buses (d) et
b) plusieurs actionneurs (a.1.1 - b.3.2) pour le contrôle de la distribution de produit de revêtement par les différentes buses (22 - 28 ; 60 ; 78),
b1) dans lequel les actionneurs (a.1.1 - b.3.2) présentent chacun une dimension externe (b) le long de la rangée de buses (21) respective,
b2) dans lequel les actionneurs (a.1.1 - b.3.2) sont disposés dans plusieurs plans d'actionneurs, dans lequel les différents plans d'actionneur s'étendent parallèlement au plan de buses avec des distances différentes par rapport au plan de buses,
c) dans lequel la distance entre les buses (d) entre les buses adjacentes (22 - 28 ; 60 ; 78) de chaque rangée de buses (21) est inférieure à la dimension externe (b) des différents actionneurs (a.1.1 - b.3.2) le long de la rangée de buses (21) respective,
d) dans lequel les actionneurs (a.1.1 - b.3.2) sont disposés dans les différents plans d'actionneurs respectivement dans plusieurs rangées d'actionneurs parallèlement à la rangée de buses (21) respective, plus particulièrement des deux côtés de la rangée de buses (21) respective,
**caractérisé en ce que**
e) les actionneurs superposés verticalement présentent entre eux un décalage horizontal qui est globalement aussi grand que la distance entre les buses (d) entre les buses adjacentes dans la rangée de buses ou correspond à un multiple entier de la distance entre les buses.

2. Applicateur selon la revendication 1, **caractérisé en ce que**
a) l'applicateur comprend plusieurs soupapes de commande (31 - 34, 39 - 41) pour le contrôle de la distribution du produit de revêtement par les buses (2 - 4), dans lequel les soupapes de commande (31 - 34, 39 - 41) sont contrôlées par les actionneurs (a.1.1 - b.3.2),
b) les soupapes de commande (31 - 34, 39 - 41) sont séparées physiquement respectivement par la buse (22 - 28) respective et sont reliées respectivement par l'intermédiaire d'un canal d'écoulement (45 - 51) avec la buse (22 - 28) correspondante, afin de permettre une correction spatiale des buses (22- 28) d'une part et des soupapes de commande d'autre part et
c) les soupapes de commande (31 - 34, 39 - 41) sont disposées avec leur point d'arrêt décalé latéralement par rapport à la rangée de buses (21) respective, afin de pouvoir réduire la distance entre les buses (d).

3. Applicateur selon la revendication 2, **caractérisé en ce que**
a) les soupapes de commande (31 - 34, 39 - 41) sont disposées des deux côtés de la rangée de buses (21) respective dans deux rangées de soupapes (29, 30) opposées par rapport à la rangée de buses (21) respective et
b) les buses (22 - 28) le long de la rangée de buses (21) respective sont reliées alternativement par l'intermédiaire des canaux d'écoulement (45 - 51) avec des soupapes de commande (31 - 34, 39 - 41) des rangées de soupapes (29, 30) opposées.

4. Applicateur selon la revendication 2, **caractérisé en ce que**
a) les canaux d'écoulement (80 - 84) partent, à partir de la rangée de buses respective, dans un plan de correction perpendiculaire à la rangée de buses respective, dans plus de deux directions différentes et/ou
b) les différentes directions des canaux d'écoulement (80 - 84) dans le plan de correction forment respectivement un angle de 20° - 70°, 30° - 60°, 40° - 50° ou de 45° et
c) les buses (78) le long de la rangée de buses respective sont reliées alternativement avec un des différents canaux d'écoulement (80 - 84).

5. Applicateur selon l'une des revendications précédentes,
**caractérisé en ce que**
a) les différents plans d'actionneurs s'étendent parallèlement au plan de buse et
b) dans les différents plans d'actionneurs, sont disposées respectivement deux rangées d'actionneurs des deux côtés de la rangée de buses respective, dans lequel les rangées d'actionneurs contiennent respectivement plusieurs actionneurs (a.1.1 - b.3.2),
c) les actionneurs dans les rangées d'actionneurs sont disposés de manière globalement équidistante.

6. Applicateur selon l'une des revendications 2 à 5, lorsqu'elle est dépendante de la revendication 2, **caractérisé en ce que**
a) les distances entre les soupapes de commandes les buses correspondantes sont partiellement différentes, de façon à ce que les canaux d'écoulement (57, 58) enjambent partiellement des distances différentes et
b) les canaux d'écoulement (57, 58) comprennent, pour la compensation des différentes distances, des moyens de compensation de pression (59), dans lequel les moyens de compensation de pression (59) compensent au moins partiellement les différentes pertes de pression le long des canaux d'écoulement (57, 58) de différentes longueurs et
c) les moyens de compensation de pression (59) présentent ce qui suit, plus particulièrement au niveau des canaux d'écoulement avec les distances les plus petites entre la buse et le siège de la soupape :
c1) une extension en zigzag,
c2) une extension de canal en zigzag,
c3) une extension de canal en spirale et/ou
c4) un rétrécissement de canal.

7. Applicateur selon l'une des revendications 2 à 6, lorsqu'elle est dépendante de la revendication 2, **caractérisé en ce que**
a) les différentes soupapes de commande comprennent chacune un siège de soupape (31 - 34, 39 - 41 ; 64) qui peut être fermé ou libéré et
b) les différents sièges de soupapes (31 - 34, 39 - 41 ; 64) présentent chacun un diamètre intérieur de 50 µm à 1500 µm et/ou
c) un élément de soupape flexible (67), plus particulièrement une membrane de soupape (67), est prévu, dans lequel cet élément de soupape (67) libère ou ferme le siège de soupape (64) en fonction de sa flexion et
d) pour la flexion de l'élément de soupape (67)
d1) un poussoir coulissant (6) est prévu, qui, dans une position de fermeture, comprime l'élément de soupape (67) contre le siège de soupape (64) et étanchéifie donc celui-ci ou
d2) une chambre de pression (72) est prévue, dans lequel la chambre de pression (72) sollicite l'élément de soupape (67) avec une pression réglable afin soit de comprimer l'élément de soupape (67) contre le siège de soupape (64) et donc d'étanchéifier celui-ci soit de libérer le siège de soupape (64).

8. Applicateur selon la revendication 7, **caractérisé en ce que**
a) un pointeau de soupape coulissant (73) est prévu, dans lequel le pointeau de soupape (73) libère ou ferme le siège de soupape (64) en fonction de sa position et
b) le pointeau de soupape (73) est traversé par un élément d'étanchéité (67), plus particulièrement par une membrane d'étanchéité (67), dans lequel l'élément d'étanchéité (67) sépare un espace d'actionneur d'un espace d'alimentation rempli de produit de revêtement et empêche ainsi que les actionneurs dans l'espace d'actionneur soient contaminés par le produit de revêtement et
c) le pointeau de soupape (73) comprend, au niveau de sa pointe, un élément d'étanchéité (74) séparé,
d) le pointeau de soupape (73) est coulissé respectivement par un des actionneurs (a.1.1 - b.3.2), plus particulièrement par
d1) un actionneur électromagnétique,
d2) un actionneur piézoélectrique,
d3) un actionneur pneumatique,
e) les actionneurs (a.1.1 - b.3.2)
e1) sont respectivement à simple action et déplacent activement le pointeau de soupape (73) ou le poussoir (69) dans une seule direction, le pointeau de soupape (73) ou le poussoir (69) étant en revanche déplacés dans une direction opposée par un ressort de rappel (71) ou
e2) sont respectivement à double action et déplacent activement le pointeau de soupape (73) ou le poussoir (69) dans les deux directions.

9. Applicateur selon l'une des revendications 2 à 8, lorsqu'elle est dépendante de la revendication 2, **caractérisé en ce que** les soupapes de commande sont disposées à l'extérieur de l'applicateur et sont reliées avec l'applicateur par une conduite de fluide (75), plus particulièrement un tuyau (75).

10. Applicateur selon l'une des revendications 2 à 9, lorsqu'elle est dépendante de la revendication 2, **caractérisé en ce que**
a) les canaux d'écoulement (45 - 51 ; 63 ; 80 - 84) sont alimentés en produit de revêtement à partir d'un canal d'alimentation (66, 53) et
b) le canal d'alimentation (66, 53) présente une hauteur de canal de 100 µm - 2000 µm et
c) le canal d'alimentation (66, 53) présente une largeur de canal de 1 mm - 5 mm et
d) le canal d'alimentation (66, 53) présente une longueur de canal de 1 mm - 100 mm.

11. Applicateur selon l'une des revendications 7 à 10, lorsqu'elle est dépendante de la revendication 7, **caractérisé en ce que**
a) les sièges de soupapes adjacents (31 - 34, 39 - 41 ; 64) des soupapes de commande sont disposés parallèlement à la rangée de buses (21) respective à une première distance (a),
b) les buses adjacentes (22 - 28 ; 60 ; 78) sont disposées le long de la rangée de buses (21) respective à une deuxième distance (d) et
c) la première distance (a) entre les sièges de soupapes adjacents représente au moins le double de la deuxième distance d) entre les buses adjacentes (22 - 28 ; 60 ; 78).

12. Applicateur selon l'une des revendications 2 à 11, lorsqu'elle est dépendante de la revendication 2, **caractérisé en ce que**
le canal d'écoulement (45 - 51 ; 63 ; 80 - 84) s'étend dans un substrat (65) qui est constitué d'un matériau qui est inerte par rapport au produit de revêtement, plus particulièrement d'un des matériaux suivants :
a) acier inoxydable,
b) matière plastique, plus particulièrement
b1) polyétheréthercétone (PEEK),
b2) polyéthercétone (PEKK),
b3) polyoxyméthylène (POM),
b4) polyméthylméthacrylate (PMMA),
b5) polyamide (PA),
b6) polyéthylène (PE),
b7) polypropylène (PP),
b8) polystyrène (PS),
b9) polycarbonate (PC),
b10) copolymère de cyclo-oléfine, plus particulièrement Topas® , Zeonor® ou Zeonex®,
c) silicium
d) verre.

13. Applicateur selon l'une des revendications 2 à 12, lorsqu'elle est dépendante de la revendication 2, **caractérisé en ce que**
a) les canaux d'écoulement (45 - 51 ; 63 ; 80 - 84) forment, au moins sur une partie de leur longueur, un angle (a) de 0° - 90°, 20° - 85°, 45° - 80° avec le jet de produit de revêtement (54 ; 61 ; 77) et/ou
b) les canaux d'écoulement (45 - 51 ; 63 ; 80 - 84) s'étendent, au moins sur une partie de leur longueur, avec un angle (a) de 0° - 90° ou de 45° - 90° ou transversalement, plus particulièrement perpendiculairement par rapport à la rangée de buses (21) respective et/ou
c) les canaux d'écoulement (45 - 51 ; 63 ; 80 - 84) s'étendent, au moins sur une partie de leur longueur, avec un angle (a) de 0° - 90° ou de 45° - 90°, plus particulièrement perpendiculairement, par rapport au jet de produit de revêtement (54 ; 61 ; 77) et de manière orthogonale par rapport à la rangée de buses (21) respective et/ou
d) les canaux d'écoulement (45 - 51 ; 63 ; 80 - 84) présentent chacun une section transversale de canal avec une hauteur de canal de 50 µm - 1000 µm ou de 100 µm - 500 µm et/ou
e) les canaux d'écoulement présentent chacun une section transversale de canal avec une largeur de canal de 50 µm - 1000 µm ou de 100 µm - 500 µm et/ou
f) les canaux d'écoulement (45 - 51 ; 63 ; 80 - 84) présentent chacun une longueur de canal de 0,1 mm - 50 mm ou de 0,5 mm - 25 mm et/ou
g) les canaux d'écoulement (45 - 51 ; 63 ; 80 - 84) présentent une section transversale de canal ronde, plus particulièrement avec un diamètre de canal de 50 µm - 1000 µm et/ou
h) les canaux d'écoulement (45 - 51 ; 63 ; 80 - 84) présentent chacun, entre le point d'arrêt des soupapes de commande et les buses (22 - 28 ; 60 ; 78), un petit volume inférieur à 1 mL, 0,5 mL, 0,1 mL, 0,01 ml, 0,001 ml et/ou
i) la distance entre les buses (d) le long de la rangée de buses (21) respective est inférieure à 3 mm, 2 mm, 1 mm ou 0,5 mm et/ou
j) les soupapes de commande sont disposées à une distance d'au moins 1 mm, 2 mm, 3 mm, 4 mm, 5 mm ou 6 mm de la rangée de buses (21) respective et/ou
k) les buses (22 - 28 ; 60 ; 78) sont disposées de manière équidistante le long de la rangée de buses (21) respective.

14. Robot de revêtement, plus particulièrement robot de peinture, avec un applicateur selon l'une des revendications précédentes.
